# EUROPEAN PATENT APPLICATION

(11) **EP 1 624 037 A1**
(43) Date of publication of application: **08.02.2006**
(21) Application number: 05016979.6
(22) Date of filing: 04.08.2005
(51) Int. Cl.: C09J 7/02, B32B 27/32, B32B 3/12

(54) **Pressure-sensitive adhesive tape**

(30) Priority: 06.08.2004 JP 2004230890
(71) Applicant: NITTO DENKO CORPORATION, Osaka (JP)
(72) Inventor: Ukei, Hiroichi, Ibaraki-shi Osaka (JP); Yatagai, Takahiro, Ibaraki-shi Osaka (JP); Nagatsu, Hideki, Ibaraki-shi Osaka (JP)
(74) Representative: Grünecker, Kinkeldey, Stockmair & Schwanhäusser Anwaltssozietät

(57) **Abstract**

A pressure-sensitive adhesive tape includs a supporting substrate and a pressure-sensitive adhesive layer formed on at least one side of the supporting substrate, an uneven portion having a shape extending in the vertical direction against the longitudinal direction of the supporting substrate being disposed on one side of the supporting substrate, wherein the supporting substrate contains a block polypropylene-based resin composition containing a polypropylene-based block copolymer and a propylene-1-butene copolymer. It is desirable that ratio of the polypropylene-based block copolymer and propylene-1-butene copolymer in the block polypropylene-based resin composition is polypropylene-based block copolymer/propylene-1-butene copolymer = 95 to 60/5 to 40 (weight ratio).

## Description

### FIELD OF THE INVENTION

This invention relates to a pressure-sensitive adhesive tape, more illustratively to a pressure-sensitive adhesive tape having excellent hand cutting property, in which its splitting in the longitudinal direction is prevented and shrinkage and deformation of its supporting substrate is prevented even when a hot melt pressure-sensitive adhesive is coated on the supporting substrate by a calender coating method or a hot melt coating method.

### BACKGROUND OF THE INVENTION

In general, a pressure-sensitive adhesive tape has a structure in which a pressure-sensitive adhesive layer is formed on one side of a tape film substrate as the supporting substrate and a release treatment is made on the other side of the substrate. Also, a pressure-sensitive adhesive tape is generally put on the market by rolling it up into a roll shape, and when it is used, it is rewound into a necessary length and then applied to an adherend by cutting in the transverse direction of the tape at the desired position (length). Accordingly, it is desirable that such a pressure-sensitive adhesive tape can be cut in the transverse direction easily with hand, and it is important that it sufficiently adheres to the adherend too.

However, when a plastic-based substrate is used in the supporting substrate (support), hand cutting property of the pressure-sensitive adhesive tape becomes so poor that a certain device is required for improving the hand cutting property. As such a method, for example, a pressure-sensitive adhesive tape in which grooves are formed on the support surface using an uneven squeezing roller (cf. Japanese Patent No. 2,694,854). It is described that a polyolefin-based resin is used in the support of this pressure-sensitive adhesive tape.

A pressure-sensitive adhesive tape prepared using a plastic-based substrate to which an unevenness processing is applied is frequently used for domestic architecture materials and packaging materials. In addition, regarding the pressure-sensitive adhesive layer in the pressure-sensitive adhesive tape prepared using a plastic-based substrate to which an unevenness processing is applied, those in which an acryl-based pressure-sensitive adhesive is coated by a solvent coating method generally occupy the majority. Particularly, when a polyolefin-based resin is used as the plastic-based substrate, it is the actual state that the pressure-sensitive adhesive for forming a pressure-sensitive adhesive layer is limited to a pressure-sensitive adhesive which is fitted for the solvent coating method because the substrate has the low heat resistance.

In the case of such a pressure-sensitive adhesive tape provided with excellent hand cut property, particularly when used for domestic architecture materials, the ability to follow up joints and the like parts having difference in levels of building materials and L-corner parts and the like corner parts (in-corner, out-corner and the like) is required. In the case of the conventional pressure-sensitive adhesive tapes which use cloth, plastic woven stuff or flat yarn as the support, excess crimp or repeated press crimp is necessary in order to follow up the shape of each part, but they do not split in the longitudinal direction of the pressure-sensitive adhesive tapes because of the toughness.

On the other hand, when a plastic-based substrate, mainly a polyolefin-based resin, is used as the support, its following up property is advantageous because of the flexibility, but its repeated press crimp to a corner part causes a problem of being split in the longitudinal direction of pressure-sensitive adhesive tape (a problem of longitudinal split).

Also, when the adherend is the heat insulating foam material, lumber or the like rough surface, a rubber-based pressure-sensitive adhesive (particularly a hot melt rubber-based pressure-sensitive adhesive) is suited from the viewpoint of adhesion reliability, and the effect of improving the aforementioned problem of longitudinal split regarding the follow up property can also be expected therefrom. In addition, as an environment protection countermeasure of recent years, non-solvent type pressure-sensitive adhesives, particularly hot melt pressure-sensitive adhesives [e.g., a solid pressure-sensitive adhesive coated by a calender method, a hot melt pressure-sensitive adhesive coated by a hot melt method (a pressure-sensitive adhesive by a thermoplastic resin or the like)], have been reconsidered, and usefulness of a rubber-based pressure-sensitive adhesive (particularly a hot melt rubber-based pressure-sensitive adhesive) has been pointed out from the viewpoint of its characteristics and its production method.

However, in the case of a plastic-based substrate mainly consisting of a polyolefin resin, for example, when the plastic-based substrate is constructed from polyethylene alone, the plastic-based substrate consisting of polyethylene is shrunk and deformed by the heat applied when a hot melt coating type pressure-sensitive adhesive is coated, because of its relatively low melting point, thus posing a problem in that pressure-sensitive adhesive tapes having sufficient appearance and performance cannot be obtained (problem of coating heat resistance).

In addition, when polypropylene which has relatively high melting point is used as the plastic-based substrate, shrinkage and deformation by heat at the time of coating are small, but orientation is added to the flow direction (longitudinal direction) of the plastic-based substrate, so that its tear strength in the transverse direction increases (reduction of hand cutting property) and longitudinal splitting is apt to occur due to the flow direction orientation, thus, as a result, it poses a problem in that the hand cutting property becomes unsatisfactory.

### SUMMARY OF THE INVENTION

Accordingly, the object of the invention is to provide a pressure-sensitive adhesive tape having excellent hand cutting property, in which its splitting in the longitudinal direction is prevented and shrinkage and deformation of its supporting substrate is prevented even when a hot melt pressure-sensitive adhesive is coated on the supporting substrate.

The present inventors have conducted intensive studies with the aim of attaining the aforementioned object and found as a result that toughness can be provided, longitudinal split resistance can be improved and heat resistance can also be improved, when the supporting substrate is formed by a propylene-based resin composition in which a propylene-based block copolymer is combined a specified propylene-based resin. The invention has been accomplished based on these findings.

That is, the invention is a pressure-sensitive adhesive tape comprising a supporting substrate and a pressure-sensitive adhesive layer formed on at least one side of the supporting substrate, an uneven portion having a shape extending in the vertical direction against the longitudinal direction of the supporting substrate being disposed on one side of the supporting substrate, wherein said supporting substrate comprises a block polypropylene-based resin composition comprising a polypropylene-based block copolymer and a propylene-1-butene copolymer.

In the aforementioned block polypropylene-based resin composition, ratio of the polypropylene-based block copolymer and the propylene-1-butene copolymer is preferably polypropylene-based block copolymer/propylene-1-butene copolymer = 95 to 60/5 to 40 (weight ratio). Also, it is desirable that thickness of the concave portion of the uneven portion on the supporting substrate is from 50 to 300 µm, and depth of the concave portion is from 30 to 90% based on thickness of a convex portion of the uneven portion on the supporting substrate.

In addition, it is desirable that the supporting substrate has a multilayer structure of at least an uneven portion side block polypropylene layer disposed on the side formed by the block polypropylene-based resin composition comprising the polypropylene-based block copolymer and the propylene-1-butene copolymer, where the uneven portion is formed, and a non-uneven portion side heat resistant layer which is disposed on the side where the uneven portion is not formed and which has heat resistance. It is desirable that the aforementioned non-uneven portion side heat resistant layer is formed from homopolypropylene.

According to the invention, it is desirable that ratio of Elmendorf tear strength in the longitudinal direction and Elmendorf tear strength in the transverse direction is Elmendorf tear strength in the longitudinal direction/Elmendorf tear strength in the transverse direction = 1.5 or more.

In this connection, a polyethylene-based resin may be contained in the block polypropylene-based resin composition for forming the supporting substrate.

In addition, according to the invention, the pressure-sensitive adhesive layer is preferably formed by coating a hot melt pressure-sensitive adhesive by a calender method or a hot melt method, and a solid rubber-based hot melt pressure-sensitive adhesive is suitable as the aforementioned hot melt pressure-sensitive adhesive.

According to the pressure-sensitive adhesive tape of the invention, it is excellent in hand cutting property, its splitting in the longitudinal direction is prevented and shrinkage and deformation of its supporting substrate is prevented even when a hot melt pressure-sensitive adhesive is coated on the supporting substrate.

### BRIEF DESCRIPTION OF THE DRAWINGS

Figs. 1A and 1B are schematic illustrations partially showing an example of the structure of the supporting substrate which constitutes the pressure-sensitive adhesive tape of the invention, wherein Fig. 1A is a plan view from the upper side and Fig. 1B is a sectional view.
Fig. 2 is a schematic perspective illustration showing a state of applying a pressure-sensitive adhesive tape to the L-corner part, in the evaluation method of longitudinal split resistance of the pressure-sensitive adhesive tape regarding the Examples.

### Description of the Reference Numerals and Signs

- 1: Supporting substrate
- 2: Concave portion
- d: Width of the concave portion 2
- L: Pitch interval of the concave portion 2
- h: Depth of the concave portion 2
- p: Thickness of the supporting substrate 1 in the concave portion 2
- q: Total or maximum thickness of the supporting substrate 1
- X: Longitudinal direction of the supporting substrate 1
- Y: Transverse direction of the supporting substrate 1
- 3: Adherend made of wood having an L-corner portion
- 4: Pressure-sensitive adhesive tape

- 4a: Longitudinal direction of the pressure-sensitive adhesive tape 4

### DETAILED DESCRIPTION OF THE INVENTION

The pressure-sensitive adhesive tape of the invention comprises a supporting substrate and a pressure-sensitive adhesive layer formed on at least one side of the supporting substrate, an uneven portion having a shape extending in the vertical direction against the longitudinal direction of the supporting substrate being disposed on one side of the substrate, wherein said supporting substrate comprises a block polypropylene-based resin composition comprising a polypropylene-based block copolymer and a propylene-1-butene copolymer. Thus, since the pressure-sensitive adhesive tape of the invention has an uneven portion having a shape extending in the vertical direction against the longitudinal direction of the supporting substrate (namely in the transverse direction) on one side of the supporting substrate, it is not necessary to cut the pressure-sensitive adhesive tape in the transverse direction using scissors, knife and the like cutting tools, and it can be cut in the transverse direction easily and safely by hand. Accordingly, scratching of an adherend by a cutting tool can be prevented, and workability at the time of cutting can be sharply improved.

In addition, since the supporting substrate is formed by a block polypropylene-based resin composition comprising a polypropylene-based block copolymer and a propylene-1-butene copolymer, it is able to satisfy both of the longitudinal direction split resistance (to be referred sometimes to as "longitudinal split resistance" or "longitudinal split preventing ability") which can inhibit or prevent splitting in the longitudinal direction of the supporting substrate, and the heat resistance (to be referred sometimes to as "coating heat resistance") that can prevent shrinkage, deformation and the like of the supporting substrate caused by heat at the time of coating of a hot melt pressure-sensitive adhesive.

### (Block polypropylene-based resin composition)

According to the pressure-sensitive adhesive tape of the invention, the polypropylene-based block copolymer in the block polypropylene-based resin composition which forms the supporting substrate is a so-called "block polypropylene", which is a thermoplastic polypropylene-based block copolymer mainly comprising a high molecular chain part derived from propylene (polypropylene high molecular chain part) and also has such a structure that a high molecular chain part derived from an α-olefin other than propylene (α-olefin-based high molecular chain part) is bonded to the aforementioned polypropylene high molecular chain part by block copolymerization. In such a polypropylene-based block copolymer (to be referred sometimes to as "block polypropylene"), α-olefins other than propylene can be used as the α-olefin, and its examples include ethylene, 1-butene, 1-pentene, 1-hexene, 4-methyl-1-pentene, 1-heptene, 1-octene and the like, of which ethylene and 1-butene are preferable, and ethylene is particularly preferable. In this connection, α-olefins may be used alone or as a mixture of two or more.

Regarding ratio of the α-olefin in the block polypropylene, it is generally about several % by weight based on the total amount of the monomer components (propylene and α-olefin). Illustratively, ratio of the α-olefin in the block polypropylene can be selected within the range of, for example, from 1 to 40% by weight based on the total amount of the monomer components, and it is preferably from 2 to 20% by weight (more preferably from 3 to 15% by weight). Accordingly, ratio of propylene in the block polypropylene can be selected within the range of, for example, from 60 to 99% by weight (preferably from 80 to 98% by weight, more preferably from 85 to 97% by weight) based on the total amount of the monomer components (propylene and α-olefin).

In this connection, a polypropylene-based random copolymer and homopolypropylene can be exemplified as the polypropylene of the same kind of the block polypropylene. The polypropylene-based random copolymer is a so-called "random polypropylene" which is a thermoplastic polypropylene-based random copolymer (also called "random polypropylene" in some cases) in which propylene as a monomer component is randomly copolymerized with an α-olefin (e.g., an α-olefin other than propylene, such as ethylene, 1-butene, 1-pentene, 1-hexene, 4-methyl-1-pentene, 1-heptene, 1-octene and the like) in an amount of several % by weight based on the total monomer components. Also, homopolypropylene is a homopolymer of propylene in which propylene alone is used as the monomer component. It is not suitable to use a random polypropylene instead of a block polypropylene as the polypropylene-based resin composition which forms the support, because it has low heat resistance and therefore sometimes causes shrinkage and deformation of the supporting substrate due to the heat applied at the time of coating a hot melt pressure-sensitive adhesive on the supporting substrate. On the other hand, it is not suitable to use homopolypropylene instead of a block polypropylene as the polypropylene-based resin composition which forms the support, because homopolypropylene has such a high crystallinity that it is poor in flexibility and shows brittle failure so that the product becomes difficult to follow up and apt to split when applied to parts having difference in levels and L-corner parts and the like corner parts (in-corner, out-corner and the like).

From the viewpoint of unevenness transferring ability by an uneven squeezing roller or the like, it is desirable that the block polypropylene has a melt flow rate (MFR; temperature: 230°C, load: 21.18 N; in accordance with JIS K 6758) of from 10 to 40 (g/10 min), more desirably from 20 to 30 (g/10 min). When MFR of the block polypropylene is less than 10 (g/10 min), unevenness transferring ability by an uneven squeezing roller or the like is poor and the hand cutting property is reduced, and when it exceeds 40 (g/10 min) on the other hand, releasing property from an uneven squeezing roller or the like roller is reduced so that film formation becomes difficult.

Regarding the pressure-sensitive adhesive tape of the invention, the propylene-1-butene copolymer (propylene-butene-1 copolymer) in the block polypropylene-based resin composition which forms the supporting substrate is not particularly limited, with the proviso that it is a copolymer of propylene and 1-butene, but from the viewpoint of compatibility with the block polypropylene, it is important that the ratio of propylene is, for example, 50 mol% or more based on the total amount of the monomer components (propylene and 1-butene), preferably from 80 to 99 mol% (more preferably from 90 to 98 mol%). Thus, when the ratio of propylene is larger than the ratio of 1-butene in the propylene-1-butene copolymer (particularly when the majority of the monomer components is propylene), the propylene-1-butene copolymer shows good compatibility with the block polypropylene and can be minutely dispersed in the block polypropylene, so that toughness can be provided by improving brittleness of crystal phase of the block polypropylene.

In this connection, when the ratio of propylene is smaller than the ratio of 1-butene in the propylene-1-butene copolymer (that is, when it becomes a 1-butene-propylene copolymer in which the ratio of 1-butene is larger than that of propylene), the 1-butene-propylene copolymer hardly shows compatibility with the block polypropylene and is mixed in the block polypropylene as the separated domain phase, so that it shows poor effect in improving brittleness of the crystal phase of block polypropylene. In addition, in the same manner, when a general thermoplastic elastomer or the like is dispersed in the block polypropylene, those in which the phase structure when dispersed in the block polypropylene become separated domain phase also show poor effect in improving brittleness of the crystal phase of block polypropylene. Such a difference in phase structure can be observed using transmission electron microscope (TEM), atomic force microscope (AFM) and the like.

It is desirable that the propylene-1-butene copolymer has a Shore A hardness (measured in accordance with ASTM D2240) of 70 or less (preferably 60 or less). When Shore A hardness (measured in accordance with ASTM D2240) of the propylene-1-butene copolymer exceeds 70, the propylene-1-butene copolymer becomes so hard that its flexibility is reduced.

In addition, it is desirable that crystal melting peak and crystallization peak are not observed when the propylene-1-butene copolymer is measured by a differential scanning calorimeter (DSC). That is, a propylene-1-butene copolymer which does not show crystal melting peak and crystallization peak when measured by a differential scanning calorimeter (DSC) can be suitably used as the propylene-1-butene copolymer. In this connection, while the block polypropylene shows distinctive crystal melting peak and crystallization peak by the DSC measurement, the propylene-1-butene copolymer does not show crystal melting peak and crystallization peak, so that crystal melting peak and crystallization peak of the block polypropylene do not change when both of them are mixed within their compatible range.

According to the invention, ratio of the block polypropylene and propylene-1-butene copolymer in the block polypropylene-based resin composition which forms' the supporting substrate is not particularly limited, but it is desirable that the block polypropylene/propylene-1-butene copolymer = 95 - 60/5 - 40 (weight ratio), and it is more desirable that the block polypropylene/propylene-1-butene copolymer = 95 - 70/5 - 30 (weight ratio). When the ratio of propylene-1-butene copolymer in the block polypropylene-based resin composition is less than 5% by weight based on the total amount of the block polypropylene and propylene-1-butene copolymer, the effect to improve longitudinal direction split resistance of the pressure-sensitive adhesive tape is poor, and when it exceeds 40 on the other hand, heat resistance is improved but hand cutting property and longitudinal split resistance are reduced.

In this connection, the propylene-1-butene copolymer described in JP-A-11-193309 can be suitably used as the propylene-1-butene copolymer.

Production method of the propylene-1-butene copolymer is not particularly limited, and, for example, a method in which propylene and 1-butene are polymerized in the presence of a conventionally known or generally used catalyst can be cited. As the aforementioned catalyst, the catalyst described in JP-A-11-193309 (a catalyst which uses the catalyst component represented by the chemical formula (1)) can be used.

According to the invention, in addition to the block polypropylene and propylene-1-butene copolymer, other polyolefin-based resin (e.g., a polyethylene-based resin or the like) may be formulated in the block polypropylene-based resin composition which forms the supporting substrate. For example, a polyethylene-based resin may be formulated in order to provide hand cutting property and to prevent neck in at the time of the film formation. As such a polyethylene-based resin, a low density polyethylene is suitable. In this connection, the polyethylene-based resin can be formulated within such a range that the longitudinal direction split resistance (longitudinal split resistance) of the pressure-sensitive adhesive tape or supporting substrate is not reduced. Illustratively, it is desirable that formulating amount of the polyethylene-based resin is similar to or smaller than the amount of propylene-1-butene copolymer.

In addition, the block polypropylene-based resin composition may contain various additive agents [e.g., a filler, a coloring agent (a pigment, a dye or the like), an age resistor, an antioxidant, a lubricant and the like]. In this connection, though there is a case in which calcium carbonate and the like various fillers are added to the block polypropylene-based resin composition at a ratio of 10 parts by weight or more based on 100 parts by weight of the resin components in the block polypropylene-based resin composition, for the purpose of improving hand cutting property and heat resistance of the pressure-sensitive adhesive tape, it is not always necessary to add a filler consisting of such an inorganic compound (calcium carbonate or the like) according to the invention. Rather, from the viewpoint of inhibiting brittle failure at low temperature, it is desirable that a filler is not added to the block polypropylene-based resin composition.

However, various fillers may be used for the purpose of providing characteristics other than the hand cutting property, heat resistance and longitudinal split resistance. As such other characteristics, flame retardancy, heat deformation preventing property, rigidity and the like can be exemplified. In such a case, it is desirable that blending amount of the filler is 5 parts by weight (preferably from 1 to 3 parts by weight) based on 100 parts by weight of the resin components in the block polypropylene-based resin composition.

### (Uneven portion)

It is important that the supporting substrate of the pressure-sensitive adhesive tape of the invention has an uneven portion having a shape extending in the vertical direction (transverse direction) against the longitudinal direction of the supporting substrate. The shape of this uneven portion is not particularly limited, and its examples include a conical shape, a triangular pyramid shape, a quadrangular pyramid shape, a hemisphere shape, a columnar shape, a triangular prism shape, a square pole shape and the like. The aforementioned uneven portion may have any condition or form, with the proviso that it is formed in a shape extending in the transverse direction of the supporting substrate (vertical direction against longitudinal direction of the supporting substrate). For example, when shape of the concave portion of the uneven portion is a conical shape, a triangular pyramid shape, a quadrangular pyramid shape or a hemisphere shape, two or more of the concave portions of a conical shape, a triangular pyramid shape, a quadrangular pyramid shape or a hemisphere shape are formed in the transverse direction, and they form a concave portion having a shape extending in the transverse direction as a whole. Also, when shape of the concave portion is a columnar shape, a triangular prism shape or a square pole shape, the columnar shape, triangular prism shape or square pole shape concave portion itself is in the transverse directionally extending shape. In this manner, the uneven portion may have such a shape that one part alone is extended in the transverse direction or have such a shape that two or more portions are extended as a combination in the transverse direction.

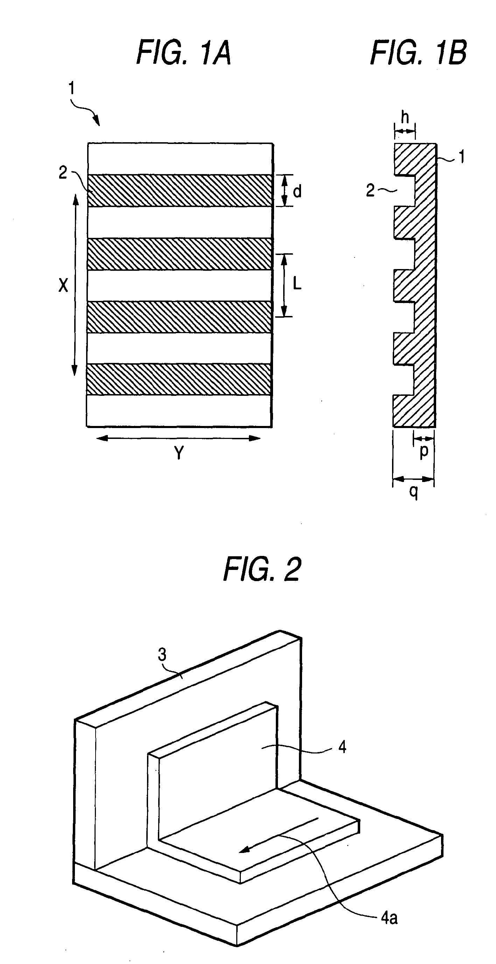

According to the invention, it is desirable that the uneven portion is arranged in a linear form or a curved form (e.g., a zigzag form, a wave form), and its examples include a form in which a linear concave portion is formed in the transverse direction as shown in Figs. 1A and 1B. Figs. 1A and 1B are schematic illustrations partially showing an example of the structure of the supporting substrate which constitutes the pressure-sensitive adhesive tape of the invention, and Fig. 1A is a plan view from the upper side and Fig. 1B is a sectional view. In Figs. 1A and 1B, a linear concave portion having a square pole shape section is arranged in the transverse direction on a supporting substrate of a long band shape. In this connection, in Figs. 1A and 1B, 1 is a supporting substrate, 2 is a concave portion, d is width of the concave portion 2, L is pitch interval of the concave portion 2, h is depth of the concave portion 2, p is thickness of the supporting substrate 1 in the concave portion 2, q is total thickness or maximum thickness of the supporting substrate 1, X is longitudinal direction of the supporting substrate 1 and Y is transverse direction of the supporting substrate 1.

Size (dimension) of the uneven portion is not particularly limited, but, for example, depth (h) of the concave portion of the uneven portion is approximately from 0.02 to 0.15 mm (preferably from 0.04 to 0.12 mm). When depth of the concave portion is less than 0.02 mm, there is a possibility of causing reduction of the transverse directional hand cutting property of the pressure-sensitive adhesive tape. In this connection, the depth of concave portion can be regarded as a distance (depth) from the top of the convex portion of the uneven portion to the bottom of the concave portion.

Also, it is desirable that the depth of concave portion of the uneven portion is from 30 to 90%, more desirably from 35 to 70%, based on the total thickness or maximum thickness of the supporting substrate (that is, thickness at the convex portion of the uneven portion of the supporting substrate, or thickness from the smooth face of one side to the top of the convex portion of the side where the uneven portion is formed). When the depth of concave portion is less than 30% based on the thickness at the convex portion of the supporting substrate, there is a possibility of spoiling hand cutting property due to reduction of the concentration of stress to the concave portion, and when it exceeds 90% on the other hand, there is a case in which the pressure-sensitive adhesive cannot be coated.

Also, from the viewpoint of improving coating heat resistance of the supporting substrate, thickness at the concave portion of the uneven portion (thickness of the thinnest portion of the supporting substrate) is preferably from 0.05 mm to 0.3 mm (from 50 µm to 300 µm), particularly preferably from 0.08 mm to 0.2 mm (from 80 µm to 200 µm).

Also, width (d) of the concave portion of the uneven portion is not particularly limited and can be selected, for example, from the range of approximately from 0.01 to 0.5 mm (preferably from 0.03 to 0.4 mm).

In addition, pitch interval (L) (an interval between central portions of adjacent concave portions) of the concave portion of the uneven portion is not particularly limited and can be selected, for example, from the range of approximately from 0.5 to 5 mm (preferably from 0.6 to 1.4 mm).

Regarding the method for forming the uneven portion, a method in which the block polypropylene-based resin composition under molten state is pressed to an unevenly engraved molding roller or the like to transfer the uneven shape, a method in which the block polypropylene-based resin composition is formed into a film or sheet shape, and then a roller or the like having an uneven shape is pressed thereto to form the shape, and the like can be exemplified, and it can be optionally selected from the conventionally known or generally used methods in response to the shape of the uneven portion. Illustratively, a method in which a film or sheet (a film or sheet of the block polypropylene-based resin composition) which is just extruded from an extruder and is still under a softened' state is formed by directly pressing between an uneven squeezing roller and a smooth roller, a method in which a film or sheet (a film or sheet of the block polypropylene-based resin composition) at room temperature, produced in advance, is softened by heating and then formed by pressing between an uneven squeezing roller and a smooth roller, and the like can be exemplified.

For the purpose of improving adhesion strength of pressure-sensitive adhesive layer, printing layer and the like, the surface (one side or both sides) of the supporting substrate formed by the block polypropylene-based resin composition may be subjected to an appropriate conventionally known or generally used surface treatment such as, for example, corona discharge treatment, plasma treatment or the like physical treatment, undercoat treatment, backside treatment or the like chemical treatment or the like.

The total thickness or maximum thickness of the supporting substrate (that is, thickness at the convex portion of the uneven portion of the supporting substrate, or thickness from the smooth face of one side to the top of the convex portion of the side where the uneven portion is formed) is not particularly limited and can be optionally selected in response to the thickness of the supporting substrate of the concave portion, ratio of the depth of concave portion to total thickness of the supporting substrate and the like, and it can be selected within the range of, for example, from 0.08 to 0.5 mm (80 µm to 500 µm), preferably from 0.1 to 0.25 mm (100 µm to 250 µm).

The supporting substrate may have transparency or opaqueness, but it is desirable that it has transparency.

According to the invention, the supporting substrate may have either shape of monolayer structure and laminate (double layer), with the proviso that it has a block polypropylene layer by the block polypropylene-based resin composition. That is, the supporting substrate may have a structure of either a monolayer structure or multilayer structure. For example, the supporting substrate may have a multilayer structure in which a block polypropylene layer and a heat resistant layer are laminated. When the supporting substrate is the laminate of a block polypropylene layer and a heat resistant layer like this case, the pressure-sensitive adhesive layer (particularly, a pressure-sensitive adhesive layer by hot melt pressure-sensitive adhesive) is generally formed at least on the side of the supporting substrate where the uneven portion is not formed, so that it is important that the block polypropylene layer is disposed at the side where the uneven portion is formed and the heat resistant layer is disposed at the side where the uneven portion is not formed. That is, according to the invention, the supporting substrate may have a multilayer structure which is formed by the block polypropylene-based resin composition containing a polypropylene-based block copolymer and a propylene-1-butene copolymer, and has at least an uneven portion side block polypropylene layer disposed at the side where the uneven portion is formed and a non-uneven portion side heat resistant layer which is disposed at the side where the uneven portion is not formed and has heat resistance.

Regarding the heat resistant layer of the aforementioned non-uneven portion side heat resistant layer and the like, it can be formed a thermoplastic resin composition which does not greatly inhibit hand cutting property and longitudinal split resistance of the pressure-sensitive adhesive tape and can exert heat resistance. Regarding the resin component of such a thermoplastic resin composition, a high crystallinity polypropylene can be suitably used, and homopolypropylene is particularly suitable. That is, the heat resistant layer of the non-uneven portion side heat resistant layer and the like can be suitably formed by a high crystallinity polypropylene (particularly homopolypropylene).

In this connection, thickness of the heat resistant layer (non-uneven portion side heat resistant layer or the like) can be optionally set in response to the total thickness, layer construction and the like of the supporting substrate. For example, when the supporting substrate has a bilayer structure of an uneven portion side block polypropylene layer and a non-uneven portion side heat resistant layer, thickness of the non-uneven portion side heat resistant layer is preferably 50% or less, particularly 30% or less, based on the thickness (total thickness) of the supporting substrate. When the ratio of thickness of the non-uneven portion side heat resistant layer to the total thickness of the supporting substrate exceeds 50%, heat resistance of the supporting substrate is improved but the hand cutting property and longitudinal split resistance are reduced in some cases.

### (Pressure-sensitive adhesive layer)

A pressure-sensitive adhesive layer is formed on at least one side (one side or both sides) of the aforementioned supporting substrate. The pressure-sensitive adhesive which constitutes such a pressure-sensitive adhesive layer is not particularly limited, and solvent coating type pressure-sensitive adhesives (e.g., a rubber-based solvent coating type pressure-sensitive adhesive, an acryl-based solvent coating type pressure-sensitive adhesive, a silicone-based solvent coating type pressure-sensitive adhesive, a urethane-based solvent coating type pressure-sensitive adhesive and the like) which are coated by a solvent coating method can be used, but a hot melt pressure-sensitive adhesive can be suitably used. By the use of a hot melt pressure-sensitive adhesive as the pressure-sensitive adhesive, exertion of bad influence of solvents upon environment can be prevented. In this connection, since a supporting substrate having excellent heat resistance is used as the supporting substrate of the invention (namely a supporting substrate formed by the block polypropylene-based resin composition containing a polypropylene-based block copolymer and a propylene-1-butene copolymer), even when a hot melt pressure-sensitive adhesive is coated on the supporting substrate, shrinkage and deformation of the supporting substrate is inhibited or prevented. The pressure-sensitive adhesive can be used alone or as a combination of two or more species.

As the hot melt pressure-sensitive adhesive, for example, a hot melt solid pressure-sensitive adhesive as a type which is coated by a calender method (calender type pressure-sensitive adhesive), a hot melt type thermoplastic pressure-sensitive adhesive as a type which is coated by a hot melt method (hot melt type pressure-sensitive adhesive) and the like can be used. A calender type pressure-sensitive adhesive can be suitably used as the hot melt pressure-sensitive adhesive.

Also, as the pressure-sensitive adhesive which forms the pressure-sensitive adhesive layer, a pressure-sensitive adhesive that has large elasticity and can improve longitudinal split resistance and rough surface adhesive property (particularly a rubber-based pressure-sensitive adhesive) can be suitably used. Accordingly, among the hot melt pressure-sensitive adhesives, a hot melt type solid rubber-based pressure-sensitive adhesive (calender type rubber-based pressure-sensitive adhesive) is suitable as the pressure-sensitive adhesive.

In this connection, as the hot melt type solid pressure-sensitive adhesive as a type which is coated by a calender method (calender type pressure-sensitive adhesive), for example, a hot melt type solid rubber-based pressure-sensitive adhesive (calender type rubber-based pressure-sensitive adhesive) in which a rubber component (e.g., butyl rubber, natural rubber, a mixture thereof or the like) is used as the main component (base polymer), and a thermoplastic elastomer, a filler, an adhesive providing resin, a softening agent, a crosslinking agent, an age resistor, an antioxidant, an ultraviolet ray absorbent, a pigment, a lubricant, an antistatic agent, a surfactant, a wax and the like additive agents are optionally blended as occasion demands, and the like can be cited.

Also, in the hot melt type thermoplastic pressure-sensitive adhesive as a type which is coated by a hot melt method (hot melt type pressure-sensitive adhesive), for example, a thermoplastic resin, an elastomer (such as, thermoplastic elastomer) and the like are used as base polymers. In this connection, the base polymers in the hot melt type pressure-sensitive adhesive can be used alone or as a combination of two or more. Examples of the thermoplastic resin of the base polymer in the hot melt type pressure-sensitive adhesive include a polyolefin-based resin, a vinyl acetate-based resin, a polyester-based resin, a styrene-based resin, a polyurethane-based resin, an acryl-based resin, a polyamide-based resin and the like, of which a polyolefin-based resin and a vinyl acetate-based resin are suitable. Examples of the polyolefin-based resin include an ethylene-based copolymer [e.g., an ethylene-vinyl acetate copolymer (EVA) or the like ethylene-vinyl ester copolymer; an ethylene-acrylic acid copolymer (EAA), an ethylene-methacrylic acid copolymer (EMAA) or the like ethylene-unsaturated carboxylic acid copolymer; an ionomer; an ethylene-methyl acrylate copolymer, an ethylene-ethyl acrylate copolymer (EEA), an ethylene-2-ethylhexyl acrylate copolymer, an ethylene-methyl methacrylate copolymer, an ethylene-ethyl methacrylate copolymer or the like ethylene-unsaturated carboxylic ester copolymer (ethylene-(meth)acrylic acid ester copolymer or the like); an ethylene-vinyl alcohol copolymer or the like], as well as polyethylene (low density polyethylene, linear low density polyethylene, metallocene catalyst method polyethylene, middle density polyethylene, high density polyethylene or the like), polypropylene or the like α-olefin polymer, an α-olefin copolymer (an ethylene-propylene copolymer, an ethylene-butene-1 copolymer, a propylene-butene-1 copolymer or the like) or the like polyolefin; a polypropylene modified resin and the like. Also, examples of the vinyl acetate-based resin include polyvinyl acetate, a vinyl acetate-(meth)acrylic acid ester copolymer, a vinyl acetate-vinyl ester copolymer, a vinyl acetate-maleic acid ester copolymer and the like.

In addition, examples of the thermoplastic elastomer of the base polymer in the hot melt pressure-sensitive adhesive include a styrene-butadiene block copolymer (SB), a styrene-isoprene block copolymer (SI), a styrene-butadiene-styrene block copolymer (SBS), a styrene-isoprene-styrene block copolymer (SIS), a styrene-ethylene-propylene-styrene block copolymer (SEPS), a styrene-ethylene-propylene block copolymer (SEP) and the like styrene-based thermoplastic elastomers (styrene-based block copolymers; for example, styrene-based block copolymers having a styrene content of 5% by weight or more); a polyurethane-based thermoplastic elastomer; a polyester-based thermoplastic elastomer; a blend-based thermoplastic elastomer, such as a polymer blend of polypropylene with EPT (a ternary-based ethylene-propylene rubber), and the like.

In this connection, the hot melt pressure-sensitive adhesive may be optionally blended with a filler, an adhesive providing resin, a softening agent, a crosslinking agent, an age resistor, an antioxidant, an ultraviolet ray absorbent, a pigment, a lubricant, an antistatic agent, a surfactant, a wax and the like additive agents as occasion demands.

Regarding the method for forming the pressure-sensitive adhesive layer, it can be optionally selected from conventionally known or generally used pressure-sensitive adhesive layer forming methods in response to the kind of pressure-sensitive adhesive to be used. For example, when a hot melt pressure-sensitive adhesive is used as the pressure-sensitive adhesive, the pressure-sensitive adhesive layer can be formed by coating the hot melt pressure-sensitive adhesive on at least one side (one side or both sides) of the supporting substrate by a calender method or a hot melt method.

In this connection, when the pressure-sensitive adhesive layer is formed on one side of the supporting substrate, the pressure-sensitive adhesive layer may be formed on the side of the supporting substrate where the uneven portion is not formed (smooth side) or formed on the side of the supporting substrate where the uneven portion is formed (uneven side). According to the invention, it is desirable that the pressure-sensitive adhesive layer is formed on the side of the supporting substrate where the uneven portion is not formed (smooth side), and in that case, the side of the supporting substrate where the uneven portion is formed (uneven side) can be used as a releasing side (easy release treating side) of a pressure-sensitive adhesive tape rolled up into a roll shape. When the uneven side is used as a releasing side, it can be made into the releasing side by forming a backside treating layer (release treating layer or mold release treating layer) through the coating of a backside treating agent (release treating agent) on the uneven portion side.

Though thickness (total thickness) of the pressure-sensitive adhesive layer is not particularly limited, it can be selected within the range of, for example, approximately from 5 to 300 µm (preferably from 20 to 200 µm).

The pressure-sensitive adhesive tape of the invention can be used as a pressure-sensitive adhesive tape rolled up into a roll shape. In this connection, the surface of its pressure-sensitive adhesive layer may be protected by a separator.

Since the pressure-sensitive adhesive tape of the invention has the aforementioned construction, it is excellent in longitudinal split resistance (split resistance in the longitudinal direction) so that, for example, the ratio of Elmendorf tear strength in the longitudinal direction (MD) (to be referred sometimes to as "MD Elmendorf tear strength") and Elmendorf tear strength in the transverse direction (TD) (to be referred sometimes to as "TD Elmendorf tear strength") can be set to MD Elmendorf tear strength/TD Elmendorf tear strength = 1.5 or more (preferably 2.0 or more). When the MD Elmendorf tear strength/TD Elmendorf tear strength (to be referred sometimes to as "MD/TD tear strength ratio") is less than 1.5, not only longitudinal split is apt to occur at the time of follow up when applied to L-corner parts and the like corner parts (in-corner, out-corner and the like) but also tear off in the longitudinal direction occurs in some cases without occurrence of linear tear off in the transverse direction when the pressure-sensitive adhesive tape is tried to be cut in the transverse direction with hands.

In this connection, the MD Elmendorf tear strength and TD Elmendorf tear strength of pressure-sensitive adhesive tapes can be calculated using an Elmendorf tear resistance tester (mfd. by Tester Sangyo), by measuring tear resistance in the longitudinal direction or transverse direction (MD Elmendorf tear strength or TD Elmendorf tear strength) of a strip of pressure-sensitive adhesive tape having a width of 63 mm in the presence of notches under conditions of room temperature (23°C) and 65% RH. In this connection, the MD Elmendorf tear strength of the pressure-sensitive adhesive tape can be evaluated as its longitudinal split resistance, and the TD Elmendorf tear strength of the pressure-sensitive adhesive tape as its hand cutting property.

In addition, evaluation of longitudinal split resistance and hand cutting property can be carried out by calculating MD/TD tear strength ratio based on the tear strengths (MD Elmendorf tear strength and TD Elmendorf tear strength) obtained by this measurement.

The following describes the invention further in detail based on examples, but the invention is not restricted by these examples. In this connection, "part(s)" means "part(s) by weight".

### (Materials used)

· Polypropylene-based block copolymer (block polypropylene)
   (1) Trade name "J707G" [mfd. by Mitsui Sumitomo Polyolefin; density: 0.910 g/cm³, melt flow rate (MFR; temperature: 230°C, load: 21.18 N; in accordance with JIS K 6758): 30 (g/10 min); to be called "block PP" in some cases]
· Homopolypropylene
   (1) Trade name "F109V" [mfd. by Mitsui Sumitomo Polyolefin; density: 0.910 g/cm³, melt flow rate (MFR; temperature: 230°C, load: 21.18 N; in accordance with JIS K 6758): 30 (g/10 min); to be called "homo PP" in some cases]
· Propylene-1-butene copolymer
   (1) Trade name "Tafcelen T3714" [mfd. by Sumitomo Chemical; density: 0.860 g/cm³, melt flow rate (MFR; temperature: 230°C, load: 21.18 N; in accordance with JIS K 6758): 3 (g/10 min); Shore A hardness (in accordance with ASTM D2240): 57; to be called "PBR" in some cases]
. Ethylene-propylene copolymer
   (1) Trade name "Tafmer A4050" [mfd. by Mitsui Chemical; density: 0.860 g/cm³, melt flow rate (MFR; temperature: 230°C, load: 21.18 N; in accordance with JIS K 6758): 3.6 (g/10 min); Shore A hardness (in accordance with ASTM D2240): 53; to be called "EPR-1" in some cases]
   (2) Trade name "Tafmer P0275" [mfd. by Mitsui Chemical; density: 0.861 g/cm³, melt flow rate (MFR; temperature: 230°C, load: 21.18 N; in accordance with JIS K 6758): 5.4 (g/10 min); Shore A hardness (in accordance with ASTM D2240): 55; to be called "EPR-2" in some cases]
**·** Polyolefin-based thermoplastic elastomer
   (1) Trade name "Adflex C200F" [mfd. by Sunaromer; density: 0.890 g/cm³, melt flow rate (MFR; temperature: 230°C, load: 21.18 N; in accordance with JIS K 6758): 6 (g/10 min); to be called "TPO" in some cases]
· Low density polyethylene
   (1) Trade name "Sumicacen G401" [mfd. by Sumitomo Chemical; density: 0.926 g/cm³, melt flow rate (MFR; temperature: 230°C, load: 21.18 N; in accordance with JIS K 6758): 4 (g/10 min); to be called "LDPE" in some cases]

### EXAMPLE 1

A mixed resin composition was prepared by dry blending respective materials at the ratio (blending part(s)) shown in Table 1 (illustratively, dry blended by blending at a ratio of block PP: 60 parts, PBR: 40 parts), a plastic film was prepared by extruding said mixed resin composition using an extruder at a die temperature of 250°C, and then said plastic film was pressed to an unevenly engraved roller to prepare the supporting substrate (tape substrate) shown in Fig. 1 having total thickness: 127 µm, depth of concave portion (groove): 45 µm, thickness at concave portion (groove): 82 µm, ratio of concave depth to total thickness: 35%, width of concave portion: 0.200 mm, pitch interval of uneven portion (pitch interval of concave portion): 1.000 mm. A backside treating layer (release treating layer or mold release treating layer) was formed by coating a silicone-based backside treating agent (release treating agent) on the uneven portion side of this supporting substrate where the concave portion was formed, and on the other hand, a corona discharge treatment was applied to the smooth side where concave portion was not formed, a pressure-sensitive adhesive layer (thickness: 150 µm) was formed on the corona discharge treatment-applied smooth side (corona discharge treated side) by coating the hot melt type solid rubber-based pressure-sensitive adhesive described below using an 8 inch calender coating machine (side roller temperature: 150°C, top roller temperature: 100°C, center roller temperature: 90°C, bottom roller temperature: 30°C), and then a pressure-sensitive adhesive tape rolled up into a roll shape was obtained by rolling up this into a roll shape.

Hot melt type solid rubber-based pressure-sensitive adhesive: a hot melt type solid rubber-based pressure-sensitive adhesive prepared by blending 100 parts of a butyl rubber (trade name "Butyl 268" mfd. by Japan Synthetic Rubber) with 50 parts of a petroleum-based resin (trade name "Escolets 1205" mfd. by Tonex), 200 parts of a softening agent (trade name "Polybutene HV300" mfd. by Nihon Sekiyu Kagaku) and 200 parts of a filler (trade name "Calcium Carbonate" mfd. by Maruo Calcium)

### EXAMPLES 2 TO 6

Respective supporting substrates (tape substrates) were prepared in the same manner as in Example 1, except that the ratios of respective materials (illustratively, respective materials block PP, PBR and LDPE) are the ratios shown in Table 1, and the depth of concave portion (µm) and the thickness of concave portion (µm) formed on the supporting substrates (tape substrates), and the ratio of concave depth to total thickness (%) are respective sizes or values shown in Table 1, and pressure-sensitive adhesive tapes rolled up into a roll shape were prepared in the same manner as in Example 1.

### EXAMPLE 7

A mixed resin composition was prepared by dryblending 70 parts of block PP, 15 parts of PBR and 15 parts of LDPE as shown in Table 1, and a plastic film having a bilayer structure in which the ratio of thickness of the mixed resin composition layer and thickness of the homo PP layer was thickness of the mixed resin composition layer: thickness of the homo PP layer = 75 : 25 (%) was prepared from this mixed resin composition and homo PP using a twin screw extruder (die temperature: 250°C). A supporting substrate (tape substrate) was prepared in the same manner as in Example 1, except that this plastic film was used, and the depth of concave portion (µm) and the thickness of concave portion (µm) formed on the supporting substrate (tape substrate), and the ratio of concave depth to total thickness (%) are respective sizes or values shown in Table 1, and a pressure-sensitive adhesive tape rolled up into a roll shape was prepared in the same manner as in Example 1.

### COMPARATIVE EXAMPLES 1 TO 6

Respective supporting substrates (tape substrates) were prepared in the same manner as in Example 1, except that the ratios of respective materials are the ratios shown in Table 2, and the depth of concave portion (µm) and the thickness of concave portion (µm) formed on the supporting substrates (tape substrates), and the ratio of concave depth to total thickness (%) are respective sizes or values shown in Table 2, and pressure-sensitive adhesive tapes rolled up into a roll shape were prepared in the same manner as in Example 1. In this connection, a film was not able to be formed in Comparative Example 4 with predetermined sizes or values of total thickness, depth of the concave portion, thickness of the concave portion and the like due to a draw resonance phenomenon in which the thickness changes in the flow direction, so that the thickness and the like are fluctuated.

**Table 1**

| | Examples | | | | | | Example 7 | |
|---|---|---|---|---|---|---|---|---|
| | 1 | 2 | 3 | 4 | 5 | 6 | Uneven side | Smooth side |
| Block PP (weight parts) | 60 | 75 | 90 | 60 | 85 | 90 | 70 | |
| Homo PP (weight parts) | | | | | | | | 100 |
| PBR (weight parts) | 40 | 25 | 10 | 20 | 8 | 5 | 15 | |
| EPR-1 (weight parts) | | | | | | | | |
| EPR-2 (weight parts) | | | | | | | | |
| TPO (weight parts) | | | | | | | | |
| LDPE (weight parts) | | | | 20 | 7 | 5 | 15 | |
| Depth of concave portion (µm) | 45 | 46 | 44 | 50 | 46 | 49 | 50 | |
| Thickness of concave portion (µm) | 82 | 81 | 82 | 85 | 86 | 85 | 85 | |
| Ratio of concave portion thickness to total thickness (%) | 35 | 36 | 35 | 37 | 35 | 37 | 37 | |
| MD Elmendorf tear strength (N) | 5.28 | 4.15 | 2.53 | 4.59 | 2.63 | 2.40 | 4.65 | |
| TD Elmendorf tear strength (N) | 2.08 | 1.92 | 1.50 | 1.89 | 1.64 | 1.45 | 2.10 | |
| MD/TD tear strength ratio | 2.54 | 2.16 | 1.69 | 2.43 | 1.60 | 1.66 | 2.21 | |
| Hand cutting property (sensory test) | O | O | O | O | O | O | O | |
| Longitudinal split resistance (sensory test) | O | O | O | O | O | O | O | |
| Heat resistance (calender coating ability) | O | O | O | O | O | O | O | |

**Table 2**

| | Comparative Examples | | | | | |
|---|---|---|---|---|---|---|
| | 1 | 2 | 3 | 4 | 5 | 6 |
| Block PP (weight parts) | 100 | | 60 | 60 | 60 | 60 |
| Homo PP (weight parts) | | 60 | | | | |
| PBR (weight parts) | | 40 | | | | |
| EPR-1 (weight parts) | | | 40 | | | |
| EPR-2 (weight parts) | | | | 40 | | |
| TPO (weight parts) | | | | | 40 | |
| LDPE (weight parts) | | | | | | 40 |
| Depth of concave portion 43 42 43 (µm) | | | | No film formed (variation of thickness) | 44 43 | |
| Thickness of concave portion (µm) | 81 | 80 | 81 | | 82 | 83 |
| Ratio of concave portion thickness to total thickness (%) | 35 | 34 | 35 | | 35 | 34 |
| MD Elmendorf tear strength (N) | 1.72 | 2.20 | 1.90 | | 1.58 | 1.44 |
| TD Elmendorf tear strength (N) | 1.57 | 2.43 | 2.25 | | 2.24 | 1.92 |
| MD/TD tear strength ratio | 1.10 | 0.91 | 0.84 | | 0.71 | 0.75 |
| Hand cutting property (sensory test) | X | Δ | Δ | | X | X |
| Longitudinal split resistance (sensory test) | O | O | O | | O | O |
| Heat resistance (calender coating ability) | O | O | Δ | | Δ | Δ |

### (Evaluation method)

Elmendorf tear strength, hand cutting property, longitudinal split resistance and heat resistance of the pressure-sensitive adhesive tapes obtained in Examples 1 to 7 and Comparative Examples 1 to 6 were evaluated by the following measuring method or evaluation methods. Results of the evaluation are also shown in Table 1 or Table 2.

### [Measuring method of Elmendorf tear strength]

Each of the pressure-sensitive adhesive tapes obtained in Examples 1 to 7 and Comparative Examples 1 to 6 was cut into test pieces of a predetermined width (63 mm width) using a cutter knife, and Elmendorf tear resistance (or tear resistance) in the longitudinal direction (MD) (MD Elmendorf tear strength) and Elmendorf tear strength (or tear resistance) in the transverse direction (TD) (TD Elmendorf tear strength) of a strip of said test pieces of pressure-sensitive adhesive tape (63 mm in width) in the presence of notches under conditions of room temperature (23°C) and 65% RH were measured using an Elmendorf tear resistance tester (mfd. by Tester Sangyo). In addition, the MD/TD tear strength ratio (MD Elmendorf tear strength/TD Elmendorf tear strength) was calculated based on the thus measured MD Elmendorf tear strength and TD Elmendorf tear strength, and tear characteristics of the pressure-sensitive adhesive tapes in the longitudinal direction and transverse direction were evaluated based on these. In this connection, the MD Elmendorf tear strength of each pressure-sensitive adhesive tape was evaluated as its longitudinal split resistance, and the TD Elmendorf tear strength of each pressure-sensitive adhesive tape as its hand cutting property.

### (Evaluation methods of hand cutting property and longitudinal split resistance by sensory tests)

Also, the hand cutting property (sensory test) and longitudinal split resistance (sensory test) were evaluated by the following sensory test methods (sensory test method of hand cutting property and sensory test method of longitudinal split resistance).

### (Sensory test method of hand cutting property)

Each of the pressure-sensitive adhesive tapes obtained in Examples 1 to 7 and Comparative Examples 1 to 6 (63 mm in width) was cut with bare hands to the transverse direction (TD) (5 times in total), and hand cutting property (sensory test) of the pressure-sensitive adhesive tape was evaluated based on the following evaluation criteria.
· Evaluation criteria
   O: Can be easily cut with bare hands in all of the 5 cases.
   Δ: Can be easily cut with bare hands in 4 cases.
   X: Can be cut with bare hands only in 3 cases or less.

### (Sensory test method of longitudinal split resistance)

Each of the pressure-sensitive adhesive tapes obtained in Examples 1 to 7 and Comparative Examples 1 to 6 (63 mm in width) was applied to the right-angled part (L-corner part) of an L-corner part-imitated adherend made of wood in such a manner that the longitudinal direction (MD) of the pressure-sensitive adhesive tape becomes a direction which is in parallel with the direction of the right-angled part of wood, and adhered by pressing with a finger, thereby allowing the pressure-sensitive adhesive tape to follow up the shape of the L-corner part, and the longitudinal split resistance (sensory test) of the pressure-sensitive adhesive tape was evaluated by its follow up ability in that case based on the following evaluation criteria.
· Evaluation criteria
   O: Follows up without splitting in the longitudinal direction (MD) of the pressure-sensitive adhesive tape.
   Δ: Follows up while partially splitting in the longitudinal direction (MD) of the pressure-sensitive adhesive tape.
   X: Does not follow up by entirely splitting in the longitudinal direction (MD) of the pressure-sensitive adhesive tape.

Fig. 2 is a schematic perspective illustration showing a state of applying a pressure-sensitive adhesive tape to the L-corner part, in the evaluation method of longitudinal split resistance of the pressure-sensitive adhesive tape regarding the Examples. In Fig. 2, 3 is an adherend made of wood having an L-corner part, 4 is a pressure-sensitive adhesive tape and 4a is longitudinal direction of the pressure-sensitive adhesive tape 4.

### (Evaluation method of heat resistance)

In addition, heat resistance (calender coating ability) of the supporting substrate when the hot melt type solid rubber-based pressure-sensitive adhesive was coated on the smooth side of the supporting substrate using an 8 inch calender coating machine, in preparing the pressure-sensitive adhesive tapes obtained in Examples 1 to 7 and Comparative Examples 1 to 6, was evaluated based on the following criteria.
· Evaluation criteria
   O: The concave portion formed on the supporting substrate was not drawn by heating by the coating of the hot melt type solid rubber-based pressure-sensitive adhesive.
   Δ: The concave portion formed on the supporting substrate was partially drawn by heating in some degree by the coating of the hot melt type solid rubber-based pressure-sensitive adhesive.
   X: The concave portion formed on the supporting substrate was completely drawn by heating by the coating of the hot melt type solid rubber-based pressure-sensitive adhesive.

In this connection, when the evaluation by the aforementioned heat resistance evaluation method becomes "Δ" or "X" due to considerable reduction of hand cutting property caused by the drawing of the concave portion formed on the supporting substrate, it can be said that heat resistance (coating heat resistance) of the supporting substrate is insufficient, and coating of a hot melt pressure-sensitive adhesive (a hot melt type solid rubber-based pressure-sensitive adhesive or the like), therefore, is difficult to carry out.

As is evident from Tables 1 and 2, each of the pressure-sensitive adhesive tapes of Examples 1 to 7 has good hand cutting property and also has excellent longitudinal split resistance, thus confirming the effect to improve split in the longitudinal direction (longitudinal split). In addition, it was confirmed that each of them also has excellent heat resistance (coating heat resistance), because the concave portion formed on the supporting substrate is not drawn even when the hot melt pressure-sensitive adhesive is coated (e.g., even when coated by a calender coating method).

Regarding Comparative Example 1, on the other hand, heat resistance is good because the supporting substrate is formed from a block polypropylene alone, but its longitudinal split resistance is low due to formation of split in the longitudinal direction (longitudinal split). Regarding Comparative Example 2, longitudinal split resistance is low due to brittleness of homopolypropylene, because block polypropylene is not used and homopolypropylene is used instead.

Also, regarding Comparative Example 3, Comparative Example 5 and Comparative Example 6, the propylene-1-butene copolymer is not used, but they respectively use an ethylene-propylene copolymer, a polyolefin-based thermoplastic elastomer and a low density polyethylene, so that their longitudinal split resistance is insufficient, and their heat resistance is also low.

In addition, regarding Comparative Example 4, film formation was not able to effect, because thickness of the supporting substrate fluctuated as described in the foregoing.

While the invention has been described in detail and with reference to specific embodiments thereof, it will be apparent to one skilled in the art that various changes and modifications can be made therein without departing from the spirit and scope thereof.

## Claims

1. A pressure-sensitive adhesive tape comprising a supporting substrate and a pressure-sensitive adhesive layer formed on at least one side of the supporting substrate, an uneven portion having a shape extending in the vertical direction against the longitudinal direction of the supporting substrate being disposed on one side of the supporting substrate, wherein said supporting substrate comprises a block polypropylene-based resin composition comprising a polypropylene-based block copolymer and a propylene-1-butene copolymer.

2. The pressure-sensitive adhesive tape as claimed in claim 1, wherein ratio of the polypropylene-based block copolymer and the propylene-1-butene copolymer in the block polypropylene-based resin composition is polypropylene-based block copolymer/propylene-1-butene copolymer = 95 to 60/5 to 40 (weight ratio).

3. The pressure-sensitive adhesive tape as claimed in claim 1 or 2, wherein thickness of a concave portion of the uneven portion on the supporting substrate is from 50 to 300 µm, and depth of the concave portion is from 30 to 90% based on thickness of a convex portion of the uneven portion on the supporting substrate.

4. The pressure-sensitive adhesive tape as claimed in any one of claims 1 to 3, wherein the supporting substrate has a multilayer structure of at least an uneven portion side block polypropylene layer disposed on the side formed by the block polypropylene-based resin composition comprising the polypropylene-based block copolymer and the propylene-1-butene copolymer, where the uneven portion is formed, and a non-uneven portion side heat resistant layer which is disposed on the side where the uneven portion is not formed and which has heat resistance.

5. The pressure-sensitive adhesive tape as claimed in claim 4, wherein the non-uneven portion side heat resistant layer is formed from homopolypropylene.

6. The pressure-sensitive adhesive tape as claimed in any one of claims 1 to 5, wherein ratio of Elmendorf tear strength in the longitudinal direction and Elmendorf tear strength in the transverse direction is Elmendorf tear strength in the longitudinal direction/Elmendorf tear strength in the transverse direction = 1.5 or more.

7. The pressure-sensitive adhesive tape as claimed in any one of claims 1 to 6, wherein a polyethylene-based resin is contained in the block polypropylene-based resin composition for forming the supporting substrate.

8. The pressure-sensitive adhesive tape as claimed in any one of claims 1 to 7, wherein the pressure-sensitive adhesive layer is formed by coating a hot melt pressure-sensitive adhesive by a calender method or a hot melt method.

9. The pressure-sensitive adhesive tape as claimed in claim 8, wherein the hot melt pressure-sensitive adhesive is a solid rubber-based hot melt pressure-sensitive adhesive.
